# EUROPEAN PATENT SPECIFICATION

(11) **EP 0 785 554 B1**
(45) Date of publication and mention of the grant of the patent: **13.06.2001**
(21) Application number: 97103755.1
(22) Date of filing: 29.01.1991
(51) Int. Cl.: G11B 23/03, B29C 45/00

(54) **Mold for manufacturing disk cartridge**
Giessform für Plattenkassette
Moule pour la fabrication d'une cassette à disque

(30) Priority: 29.01.1990 JP 730790; 29.01.1990 JP 730890; 30.01.1990 JP 770490; 30.01.1990 JP 770590; 14.02.1990 JP 1318290; 26.02.1990 JP 1857290; 26.02.1990 JP 1857390; 26.02.1990 JP 1857490; 15.03.1990 JP 6486990; 15.03.1990 JP 2650590; 26.09.1990 JP 10058590
(43) Date of publication of application: 23.07.1997
(62) Divisional of application: 91101160.9
(73) Proprietor: DAI NIPPON INSATSU KABUSHIKI KAISHA, Tokyo-To (JP)
(72) Inventor: Akiyama, Noboru, DAI Nippon Insatsu K.K., Shinjuku-ki, Tokyo-to (JP); Kameda, Katsumi, DAI Nippon Insatsu K.K., Shinjuku-ki, Tokyo-to (JP)
(74) Representative: Grünecker, Kinkeldey, Stockmair & Schwanhäusser Anwaltssozietät

(56) References cited:
- EP-A- 0 242 158
- EP-A- 0 339 651
- EP-A- 0 348 937
- PATENT ABSTRACTS OF JAPAN vol. 014, no. 226 (P-1047), 14 May 1990 & JP 02 053282 A (SONY CORP), 22 February 1990, & US 5 161 081 A
- PATENT ABSTRACTS OF JAPAN vol. 010, no. 284 (P-501), 26 September 1986 & JP 61 104330 A (DENKI KAGAKU KOGYO KK), 22 May 1986,

## Description

### BACKGROUND OF THE INVENTION

This invention relates to a mold for injection molding of a disk cartridge for encasing a recording medium such as an optical disk or a magnetic disk

In general a magnetic disk or an optical disk is encased in a cassette case made of two shell halves. Each shell half is made by resin molding. Normally, polypropylene is used for a disk cartridge because of its good fluidity. Further, when polypropylene is injected into a cavity formed between two metal molds separated from each other though a plurality of injection holes formed in a mold. Accordingly weld patterns are formed, on the surface of the case, at a position where melt resins flown into the cavity from different injection holes are joined. This results in a bad outer appearance.

In order to avoid the formation of wave patterns, a specific injection molding is disclosed in Japanese Laid-Open Publication HEI-12-53282 corresponding to U.S. Patent No. 5,161,081. According to the Japanese Laid-Open Publication a slide core 37 is arranged to make a head insertion opening of a disk cartridge for inserting a write-read head. The slide core has a single runner 36 at the end of which a plurality of gates 34 are disposed in a line substantially all over the periphery of an injection head 35. In this molding, the runner 36 is single and, however, melt resin is supplied into the cavity through a plurality of gates 34. After the injection is finished, the slide core 37 is taken out of the injection mold to leave a head-insertion opening in a shell half. In this molding, melt resin is fed into the cavity from one part of the molding to result in no wave line or pattern on the surface of a case. However, the slide core 37 slidably operated is necessary.

### SUMMARY OF THE INVENTION

It is an object of this invention to provide a mold of manufacturing a disk cartridge without formation of weld patterns on the surface of the disk cartridge irrespective of using polycarbonate as a resin material which has a low fluidity.

It is another object of this invention to provide a cartridge which has no wave patterns on its surface.

According to this invention, there is provided a mold for injection molding of a disk cartridge made of polycarbonate, characterized in that the mold comprises two half molds to be assembled with each other to form a cavity for either an upper or a lower shell half of a case and a spindle insertion hole located at a center of a cartridge and a head insertion hole adjacent the spindle insertion hole on each shell half, either of two molds having a single injection hole at a position opposed to almost a center of a groove provided near the spindle insertion hole in its longitudinal direction on a surface of the case for receiving a retaining plate 30 to guide a tail end of a slide plate of a shutter.

This invention will be understood from the following detailed description of the preferred embodiments of this invention with reference to the drawings.

### BRIEF DESCRIPTION OF THE DRAWINGS

In the accompanying drawings:
FIG. 1 is a perspective view of a disk cartridge manufactured by use of a mold according to this invention;
FIG. 2 is a perspective view of the disk cartridge when a shutter is opened;
FIGS.3 and 4 are two plan views of two half molds assembled opposite to each other for forming an upper shell half, respectively; and
FIG.5 is a plan view of an inner face of the disk.

### DETAILED DESCRIPTION OF THE INVENTION

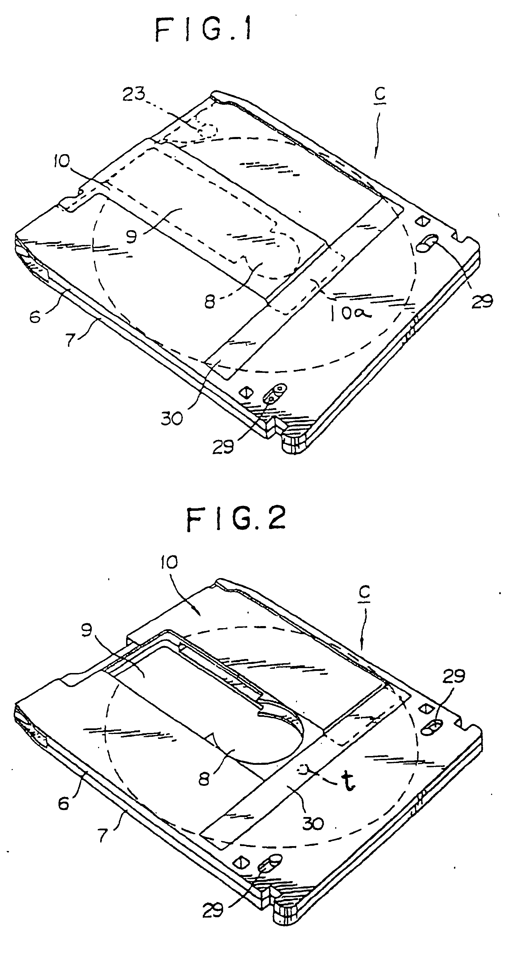

As shown in FIGS. 1 and 2, a disk cartridge C for encasing an optical disk, has upper and lower shell halves 6 and 7 which are assembled in alignment with each other to form a case. The center portion of the case has a spindle insertion hole 8 and a head insertion hole 9 is disposed adjacent the spindle insertion hole 8 to receive a reading/writing head (not shown) to form an opening portion of the case.

In order to open and close the opening portion, a shutter 10 is provided slidably in the left and right directions against a repulsive force of a spring 23, on the disk cartridge C. The shutter 10 has a slide plate 10a which is slidably guided by a retaining plate 30. The slide plate 10a is formed at the tail end of a closing plate of the shutter 10. The retaining plate 30 is extended laterally of the case. The center portion of the retaining plate 30 is extended adjacent the spindle insertion hole 8.

In FIGS. 1 and 2, a reference numeral 29 indicates a writing protection part for preventing new information from being recorded in the recording surface of the disk.

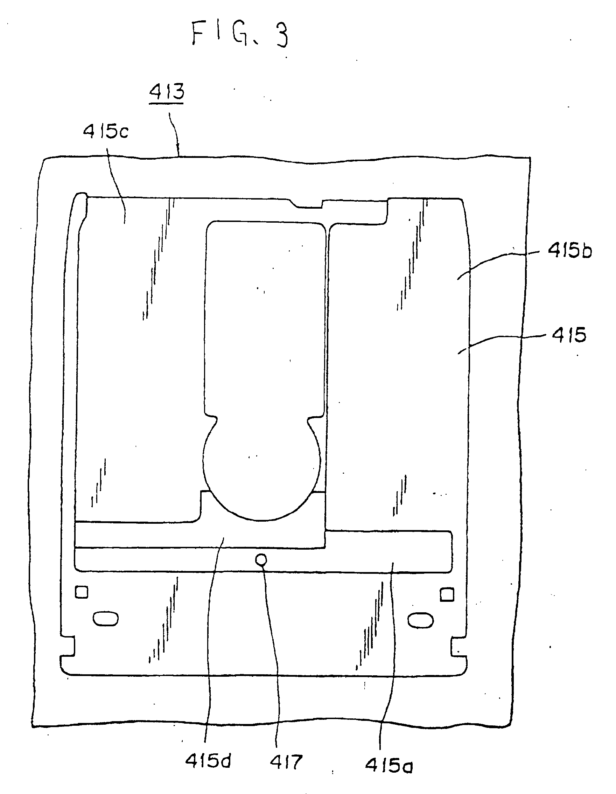

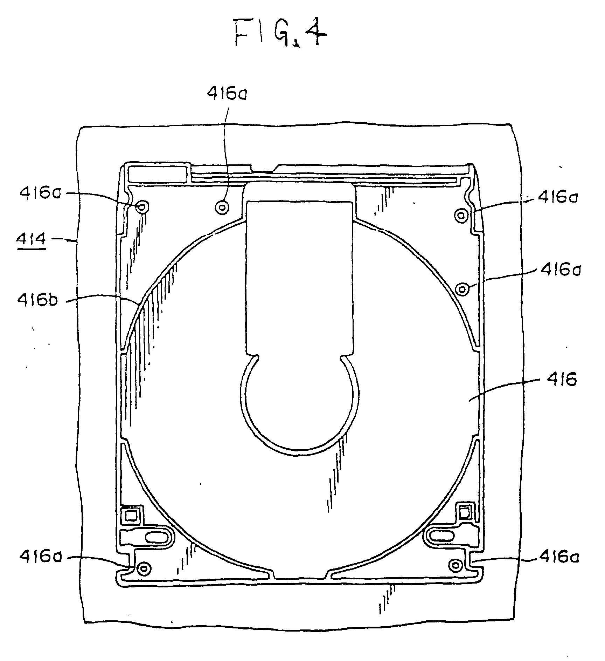

Each shell half is made by a mold. Two molds are prepared for the upper and lower shell halves 6 and 7. One of the two molds for the upper shell half 6 will now be explained. The mold has, as shown in FIG. 3, a half mold 413 and a half mold 414 as shown in FIG. 4. The two half molds 413 and 414 are arranged to oppose to each other. The half mold 413 has a cavity 415 with a shape corresponding to an outer shape of the upper shell half 6 while the half mold 414 has a cavity 416 with a shape corresponding to an outer shape of the inner shape of the upper shell half 6. When the two cavities are combined together to form a single cavity for forming the upper shell half 6.

The half mold 413 is provided with a single gate 417 (injection hole), at a position slightly deviated from the center of the cavity 415. The single gate 417 is formed at the distal end of a nozzle provided in the mold. The deviated position corresponds to a position 415a where the retaining plate 30 is attached to the surface of the case in order to guide the slide plate 10a of the shutter 10. The position 415a is projected to form a groove for receiving the retaining plate 30. The single gate 417 is opened to almost a center position of the projected position 415a in its lateral direction and is close to the periphery of the spindle insertion hole 8. The single gate 417 is located close to a center position of the case. Therefore, melt resin is fed smoothly into the corner portions of the cavity. The cavity 415 is provided with a flat forming part 415d and a guide groove forming part 415c for guiding a closing plate of the shutter 10 in addition to the retaining plate attaching projections 415a. The half mold 414 comprises a plurality of forming parts 416a, 416a---416a located at four corners of the cavity 416 for forming a surrounding wall.

When the upper shell half is formed by the two half molds 413 and 414, they are combined to form the cavity corresponding to the upper shell half 6, into which a melted synthetic resin of polycarbonate is injected through the injection mold 417.

In general, as a resin material for the disk cartridge, polypropylene is used because of its good fluidity. However, in this invention polycarbonate is used as a resin material. Polycarbonate has a good heat-resistance irrespective of a bad fluidity and is stronger that normal polypropylene.

However, the polycarbonate as a very low fluidity in a cavity of a mold. Accordingly, if polycarbonate is used for molding a disk cartridge which has a part of a thickness less than 1 mm, a high injection pressure and a high temperature of the resin material are needed. Therefore, normally, an expert of the injection molding does not think that the cartridge of polycarbonate which has a part of a thickness of 1 mm and a size of 135 mm x 150 mm can be made through a method in which a single injection hole is used. However, the inventor found out that even if the polycarbonate is used for an injection molding with a single injection hole in which a disk cartridge having a part of a thickness of less that 1 mm and a size of 135 mm x 150 mm, a good injection molding was possible under the conditions of the injection pressure and temperature as follows:
Mold temperature: 80°C - 90°C
Injection pressure: 1500- 1600 kg/cm²
Melted resin temperature: 250°C - 280°C

In the case of a 5-inch diameter disk cartridge, the diameter of the injection hole 417 is determined as approximately 1.5 mm or less than 1.5 mm. The diameter may be 1.0 to 1.5 mm, preferably 1.2 mm. In the case of a 3.5 inch (84 mm) disk, the diameter of the injection hole 417 is at the range of 0.7 to 1.0 mm, preferably 0.8 mm or 0.9 mm.

After an injection forming is performed, a gate trace t (FIG. 3) is formed at a position corresponding to the gate 417 However, the gate trace t is covered with the retaining plate 30 on each shell half. Therefore, a bad outer appearance of the case can be effectively avoided.

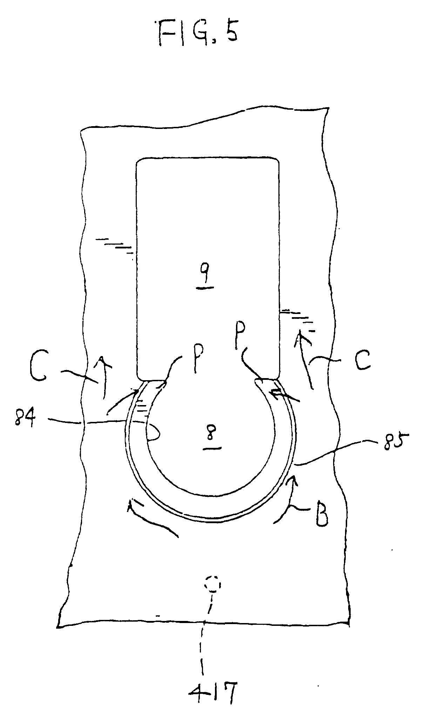

Further, if each shell half is formed by the mold having a single injection hole 417 in this manner, there is no weld pattern on the surface of the case, which is a wave-form pattern of line at a position where melt resins flown into the cavity from different injection holes are joined. Therefore, a good outer appearance is obtained. In addition, in this invention, the injection hole 417 is located near the spindle insertion hole 8. Therefore, even if an annular projection 85 is provided separately from the edge 84 of the spindle insertion hole in order to stably support the disk at a non-recording surface and two inward projections P, P are formed between the two holes 8,9 so as to oppose each other, the melt resin can smoothly flow to a portion at the annular projection 85 and portions at the opposed projections P,P along flow lines B, C as shown in FIG. 5.

A mold for the lower shell half 7 has a similar constructions. The lower shell half has also a retaining plate 30 like the upper shell half 6.

In the above-embodiment, the disk cartridge is for a disk of 5-inch (120 mm) diameter and, however, this invention can be adapted to a 3.5 inch (84 mm) disk.

## Claims

1. A mold for injection molding of a disk cartridge made of polycarbonate, **characterized in that** the mold comprises two half molds (413,414) to be assembled with each other to form a cavity for either an upper or a lower shell half of a case and a spindle insertion hole (8) located at a center of a cartridge and a head insertion hole (9) adjacent the spindle insertion hole on each shell half, either of two half molds having a single injection hole (417) at a position opposed to an almost center of a groove provided near the spindle insertion hole in its longitudinal direction on a surface of the case for receiving a retaining plate (30) to guide a tail end of a slide plate of a shutter.

2. A mold according to claim 1, wherein the injection hole (417) has a diameter of approximately 1.5 mm in case of a 5-inch disk cartridge.

3. A mold according to claim 1, wherein said mold is used under condition of a mold temperature of 80° to 90°C, and injection pressure of 1,500 to 1,600 kg/cm², and a melted resin temperature of 250° to 280°C.

4. Use of a mold according to claim 1 for manufacturing a disk cartridge.

## Patentansprüche

1. Gießform zum Spritzgießen einer Plattenkassette, die aus Polycarbonat hergestellt ist, **dadurch gekennzeichnet,** dass die Gießform zwei Gießformhälften (413, 414 umfasst), die miteinander zusammenzusetzen sind, um einen Hohlraum für entweder eine obere oder eine untere Schalenhälfte eines Gehäuses zu bilden, das ein Spindeleinsetzloch (8) umfasst, das in der Mitte einer Kassette angeordnet ist und ein Kopfeinsetzloch (9) benachbart zu dem Spindeleinsetzloch auf jeder Schalenhälfte umfasst, wobei jede der beiden Gießformhälften ein einzelnes Einspritzloch (417) an einer Position gegenüberliegend zu beinahe der Mitte einer Auskehlung aufweist, die nahe des Spindelsetzlochs in dessen Längsrichtung auf einer Oberfläche des Gehäuses vorgesehen ist zum Aufnehmen einer Halteplatte (30) zum Führen eines hinteren Endes einer Gleitplatte eines Verschlusses.

2. Gießform nach Anspruch 1, wobei das Einspritzloch (417) einen Durchmesser von ungefähr 1,5 mm im Fall einer 5 Zoll-Plattenkassette hat.

3. Gießform nach Anspruch 1, wobei die Gießform unter den Bedingungen einer Gießtemperatur von 80°C bis 90°C, einem Einspritzdruck von 1500 bis 1600 kg/m² und einer Temperatur des geschmolzenen Harzes von 250°C bis 280°C verwendet wird.

4. Verwendung einer Gießform nach Anspruch 1 zum Herstellen einer Plattenkassette.

## Revendications

1. Un moule pour le moulage par injection d'une cassette de disque réalisée en polycarbonate, caractérisé en ce que le moule comprend deux demi-moules (413, 414), devant être assemblés l'un à l'autre pour former une cavité devant donner soit une demi-coquille supérieure, soit une demi-coquille inférieure d'un boîtier, et un trou d'insertion de broche (8) placé au centre d'une cassette et un trou d'insertion de tête (9) adjacent au trou d'insertion de broche (8) sur chaque demi-coquille, l'un des demi-moules ayant un trou d'injection (417) unique situé en une position opposée pratiquement au centre d'une gorge ménagée près du trou d'insertion de broche dans sa direction longitudinale sur une surface du boîtier, afin de recevoir une plaque de retenue (30) devant guider une extrémité arrière d'une plaque de coulissement d'un obturateur.

2. Un moule selon la revendication 1, dans lequel le trou d'injection (417) est d'un diamètre d'environ 1.5 mm dans le cas d'une cassette pour disque de 5 pouces.

3. Un moule selon la revendication 1, dans lequel ledit moule est utilisé dans des conditions de température de moulage de 80°C à 90°C et d'une pression d'injection de 1500 à 1600 kg/cm², et une température de résine fondue de 250°C à 280°C.

4. Utilisation d'un moule selon la revendication 1, pour fabriquer une cassette à disque.
